# EUROPEAN PATENT SPECIFICATION

(11) **EP 3 545 740 B1**
(45) Date of publication and mention of the grant of the patent: **30.12.2020**
(21) Application number: 19161564.0
(22) Date of filing: 08.03.2019
(51) Int. Cl.: A01C 7/08

(54) **SEED DISTRIBUTION HEAD FOR AGRICULTURAL MACHINERY**
SAATGUTVERTEILERKOPF FÜR LANDWIRTSCHAFTLICHE MASCHINEN
TÊTE DE DISTRIBUTION DE GRAINES POUR MACHINE AGRICOLE

(30) Priority: 26.03.2018 IT 201800003966
(43) Date of publication of application: 02.10.2019
(73) Proprietor: Matermacc S.p.A., 33078 San Vito al Tagliamento (PN) (IT)
(72) Inventor: BOSCO, Gabriele, 33033 Codroipo (UD) (IT); BIASIN, Giuliano, 33098 Valvasone Arzene (PN) (IT)
(74) Representative: Corradini, Corrado

(56) References cited:
- EP-A1- 0 061 335
- DE-A1-102016 010 270
- IT-A1- AN20 130 030

## Description

### TECHNICAL FIELD

The present invention relates to a seed distributor device for agricultural machinery, particularly suitable for being associated with a seeder for seed spreading over the soil.

It should be noted that by the term "agricultural" it is meant here and in the following whatever is concerned with agriculture from a technical and productive viewpoint, whilst by the term "agricultural machinery", it is meant any devices and machinery intended for working the soil, fertilizing, sowing, threshing grain, preparing forage, and so on. However, the aforementioned intended use is given by way of example only and should not be construed as limiting application of the distributor device according to the present invention within other different but similar sectors.

### BACKGROUND ART

Seeders are known which are suitable for simultaneously spreading a plurality of seeds in a plurality of furrows over the soil to be cultivated. The seeders comprise a metal frame which is resting on the ground by at least one wheel and is connected to a tractor for towing the seeder itself. The metal frame is usually arranged transversely with respect to the advancement direction of the seeder, and a plurality of sowing units are associated on the metal frame. Each sowing unit comprises at least one dispensing device comprised of a chamber which exhibits an inlet and an outlet for the to-be-sown seeds, a transport conduit, and a seed distributor device. The dispensing device and the distributor device are arranged in fluid communication with a high-speed air source, via the transport conduit.

The distributor device comprises a chamber which exhibits an inlet and a plurality of outlets for the seeds to be spread. Each outlet is connected to a transport conduit that brings the seeds near the furrow made on the soil into which the same are to be settled.

In use, a predetermined quantity of seeds, established by an operator, is dosed by the dispensing device inside the transport conduit and transported by effect of high-speed air to the chamber of the distributor device, and from there conveyed towards the seed outlets, and thus released into the transport conduits.

ITAN20130030 discloses a distribution head for granular material for agricultural machines which comprises a chamber defined by a cover, a bottom wall and a side wall. The chamber further comprises a hole for the inflow of a mixture of air and granular material obtained in the bottom wall, and a plurality of openings for the outflow of said mixture. An impeller is mounted inside the chamber and it is constrained to the cover and keyed on a drive shaft. Several trials conducted by the Applicant have highlighted the importance of evenly spreading the entire quantity of seeds established by the operator, such that each furrow receives substantially the same quantity of seeds. Therefore, a need is felt for an improved seed distributor device capable of spreading an equal quantity of seeds into each transport conduit.

In the light of the foregoing, it is an object of the present invention to provide a solution so as to meet this requirement.

This and other objects are achieved through the embodiments of the invention comprising the technical features defined in the main claim. The dependent claims outline preferred and/or particularly advantageous aspects of the invention.

### DISCLOSURE OF THE INVENTION

An aspect of the solution according to the present invention makes available a distributor device for agricultural machinery comprising a casing which internally defines a distributing chamber comprising an inlet and a plurality of peripheral outlets for the granular material to be spread, the inlet being particularly suitable for being connected to a transport conduit of a mixture of air and granular material to be spread, and the peripheral outlets being particularly suitable for being connected to transport conduits for conveying the granular material towards a ground, the distributor device further comprises an impeller arranged proximate the inlet of the distributing chamber, said impeller is rotatably connected to a frame, said frame is engaged with the casing and comprises a plurality of shaped arms.

Thanks to this solution it is possible to change the direction of a seed-air mixture flow entering the distributor device towards the center of the distributing chamber and therefore at a position equally distanced from the peripheral outlets, such that the seed quantities coming out from each peripheral outlet are substantially the same.

Thanks to this solution it is further possible to exploit the air flow entering the distributor device in order to change the direction of the seed-air mixture flow entering the distributor device.

Still thanks to this solution, during use of the distributor device of the present invention, it is possible to firmly hold the impeller in place, wherein changing the distributor device casings of the known type is unnecessary.

Still another aspect of the present invention provides that the casing comprises a first half-shell and a second half-shell selectively engaged with each other, said shaped arms being engaged with the half-shells.

Thanks to this solution it is possible to engage the impeller with the casing of the distributor device without the need for any additional fastening elements. Another aspect of the present invention provides that the first half-shell comprises a concave surface with a central projection defining an annular depression along the edge portion of the first half-shell.

It is also possible to connect a transport conduit, containing an impeller not according to the present invention, to several casings in a rapid manner and without further changes being needed.

A further aspect of the present invention provides that said peripheral outlets are formed along a peripheral annular portion of the second half-shell. Another aspect of the present invention provides that the device comprises a plurality of impellers.

Thanks to this solution it is possible to efficiently and effectively spread different types of granular material, under different environmental conditions, so as to comply with predetermined requirements as established by the specific application of the present invention.

Another aspect of the solution according to the present invention provides for a sowing unit for agricultural machinery, comprising one or more seed dispensing devices, and a transport conduit, characterized in that said sowing unit further comprises a distributor device as defined above, and that the transport conduit is arranged in fluid communication with at least one seed dispensing device and the seed distributor device in order that a mixture of seeds and air is transported from the dispensing device to the distributor device.

### BRIEF DESCRIPTION OF THE DRAWINGS

Further characteristics and advantages of the present invention will become more apparent from the following description, made by way of example with reference to the attached figures wherein:
- figure 1 is a partial view of a seeder;
- figure 2 is a schematic view of a sowing unit of the seeder of figure 1;
- figure 3 is a sectional view of a distributor device according to the present invention;
- figure 4 illustrates the arrangement of a seed-air mixture flow inside a distributor device of the known type;
- figure 5 is a graph representing the quantity of seeds measured when exiting each peripheral outlet of a distributor device of the known type;
- figure 6 illustrates the arrangement of a seed-air mixture flow inside a distributor device according to the present invention; and
- figure 7 is a graph representing the quantity of seeds measured when exiting each peripheral outlet of a distributor device according to the present invention.

### BEST WAY TO IMPLEMENT THE INVENTION

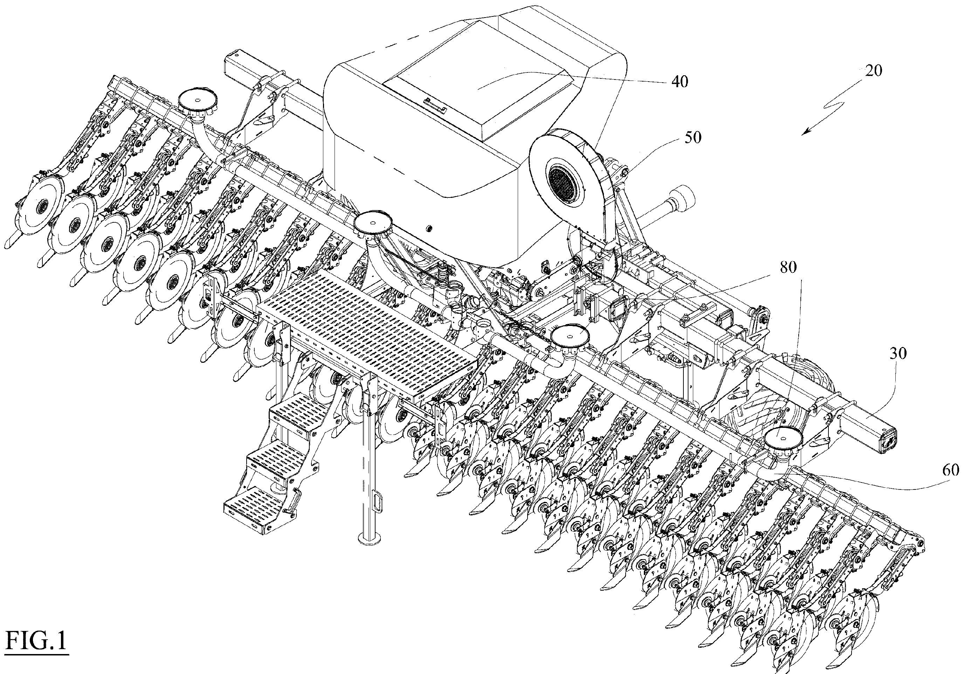

The present exemplary embodiment refers to a distributor device associated with a seeder. However, based on several embodiments, the device according to the invention is also applicable to different kinds of machinery. With particular reference to the figures, a seeder, generally indicated in Figure 1 by the numeral 20, comprises a main frame 30, usually made up of a metallic material, selectively engageable with a tractor machine, by way of non-limiting example with an agricultural tractor (not illustrated). The main frame 30 is elongated in a preferred direction, substantially orthogonal to the advancement direction of the tractor machine and comprises a rear side member comprising attachment means, preferably a three-point attachment, for its selective connection to the tractor machine.

The seeder 20 comprises a containment reservoir 40 of the granular material, preferably seeds, which is fixed to the main frame 30.

The seeder 20 comprises one or more sowing units fixed to the main frame by means of selective connection members. Each sowing unit comprises one or more dispensing devices 45, connected to the seed containment reservoir 40, a transport conduit 60 and a seed distributor device 80.

The seeder 20 comprises one or more high-speed air sources, by way of non-limiting example, at least one centrifugal fan 50, driven by a motor of the known type, not shown. The fan 50 is arranged upstream of the sowing units in the advancement direction of the high-speed air.

As shown in the figures, the fan 50 is connected to the transport conduit 60, which, in turn, is arranged in fluid communication with the dispensing device 45 and the seed distributor device 80. The fan 50 is capable, in use, of adjusting the volume of air inside the transport conduit 60 so that the seeds contained in the dispensing device 45 are insertable into the transport conduit 60 and a seed-air mixture is transported up to the distributor device 80.

The dispensing device 45 is adapted, in use, to increase or decrease the quantity of seeds dispensed into the transport conduit 60 based on a predetermined quantity established by an operator.

Of course, it is possible to also provide a configuration in which the containment reservoir 40 is in direct fluid communication with the seed distributor device 80 with no use of an intermediate dispensing device 45 being provided, while not departing from the scope of the present invention.

The seed distributor device 80 comprises an internally hollow casing 79 and defining a chamber 81 internally thereof. The casing 79 can be defined by a single frame or, alternatively, by a first half-shell 82 and a second half-shell 92 configured to be joined together thereby defining the chamber 81. Both half-shells 82, 92 comprise, for example but not limitedly, a substantially concave body, and the first half-shell 82, arranged above the second half-shell 92 in the accompanying figures, may comprise a central projection 84 which defines an annular depression 86 within the chamber 81.

Each half-shell 82, 92 comprises a peripheral flange, which encloses the annular depression 86, and is adapted to be selectively coupled and fixed by means of suitable fastening elements, known per se, to the peripheral flange of the other half-shell 82, 92, for example by interposition of a sealing gasket. Of course, also the particular geometrical configuration of the two half-shells is given by way of example and does not constitute an essential characteristic for the technical issue solved by the present invention, as will become more apparent also in a later section. For example, it is possible to provide different embodiments of the present invention in which the casing 79 may be devoid of the central projection 84, and, consequently, of the annular depression 86. The second half-shell 92 comprises a central inlet opening 94 of the distributing chamber 81 and a plurality of peripheral outlet openings 1 to 12 of the distributing chamber 81, formed along the peripheral annular portion of the second half-shell 92 and radially distributed. The central inlet opening 94 is particularly adapted to be coupled to one end of the transport conduit 60 in order to allow, in use, entry of the seed-air mixture into the distributing chamber 81. The conformation of the distributor device 80 is such that the same is also referred to as "mushroom".

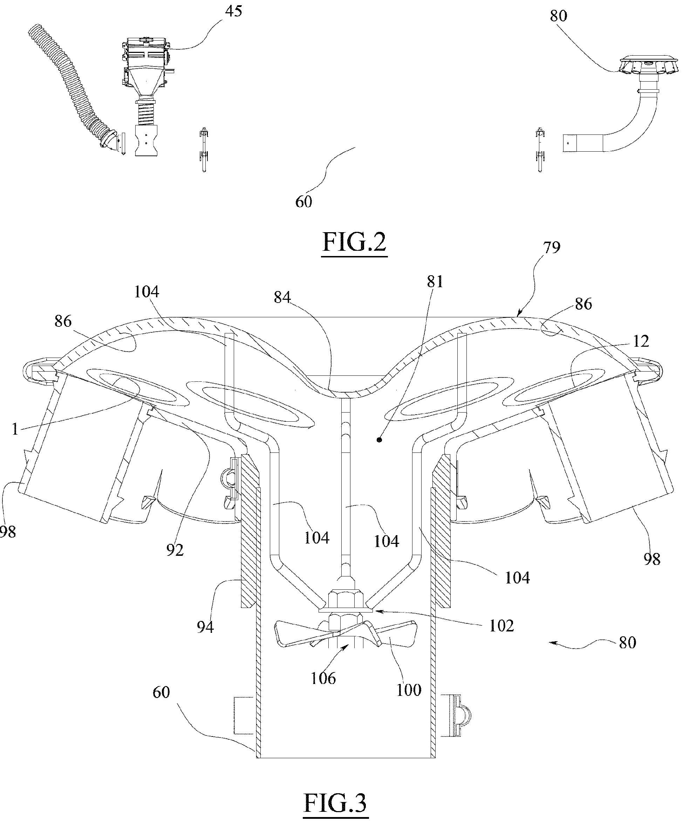

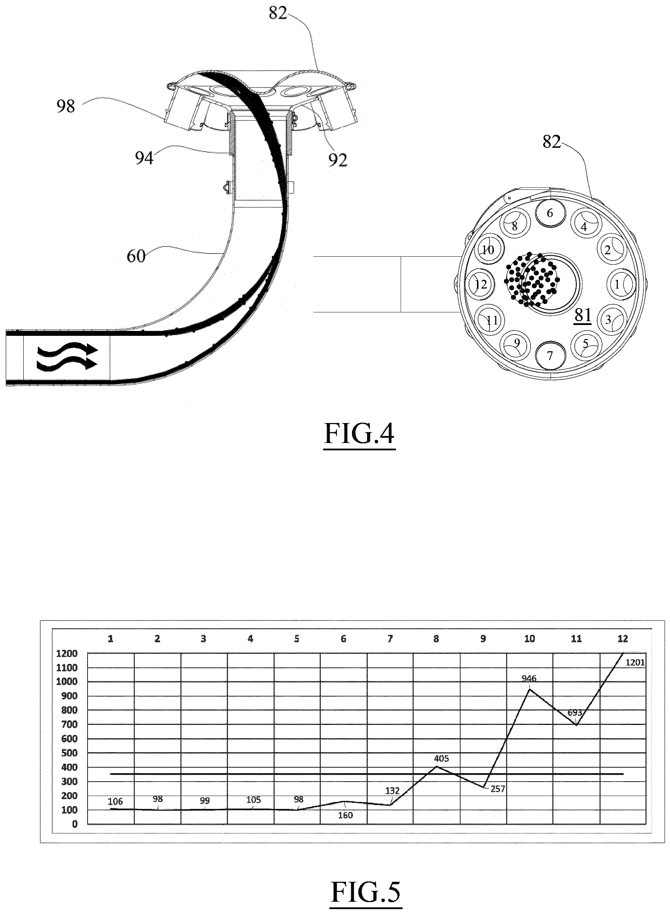

As shown in figures 3 and 5, in one of the embodiments of the present invention, the second half-shell 92 comprises twelve peripheral outlet openings, indicated by the numerals 1 to 12 for the sake of convenience, each obtained at an angular distance such that the same are evenly distributed along the whole peripheral annular portion of the second half-shell 92. Of course, there may be provided arrangements, angular distances and/or number of peripheral outlet openings with same and/or different diameter, while not departing from the scope of the present invention. For example, the distributor device 80 may comprise four outlet openings, or any outlet number greater than four.

The peripheral outlet openings 1 to 12 are particularly suitable for being connected each to an end of a transport conduit 98, preferably, but not necessarily, to a flexible tube of plastic material, in order to allow, in use, the exiting of the seeds from the distributor device. The other respective ends of the transport conduits 98 are arranged facing the soil so as to spread the seeds into the soil furrows during use.

The seed distributor device 80 according to the present invention further comprises an impeller 100 arranged proximate the central inlet opening 94 of the distributor device 80. The impeller 100 comprises, by way of non-limiting example, four blades and is pivotally connected to a frame 102. The frame 102 is provided with shaped arms 104 particularly adapted to be engaged, in use, with the second half-shell 92 and the first half-shell 82 of the distributor device 80.

In the preferred embodiment shown in the figures, the lower end of the shaped arms 104 keeps resting on the annular depression 86 of the first half-shell 82, and an intermediate portion thereof keeps resting on the annular portion of the second half-shell 92. Thanks to this configuration the frame 102, and therefore the impeller 100, can be engaged to interlock into the distributor device 80 without the need for further fastening elements, and without the configuration of the two upper 82 and lower 92 discs having to be changed.

The frame 102 further comprises a through opening within which an idle shaft 106 is engaged rotatably, with the impeller 100 being engaged therewith.

According to a further embodiment, the seed distributor device 80 according to the present invention comprises several impellers 100 also disposed proximate the central inlet opening 94 of the distributor device 80. The impellers 100 may be engaged rotatably to the idle shaft 106 within the inner space defined by the frame 102, so as to be arranged closer to the distributing chamber 81. Alternatively, the idle shaft 106 may extend beyond the through opening of the frame 102 and the impellers 100 may be engaged rotatably with the idle shaft 106 outside the inner space defined by the frame 102, so as to be arranged further inside the transport conduit 60. The number and/or the different arrangement of the impellers 100 may depend on the type of granular material spread by the distributor device, the environmental conditions in which the distributor device is being used, or predetermined requirements the distributor device shall comply with.

According to a further preferred embodiment of the present invention, the frame 102 may be engaged removably to the transport conduit 60 by means of engagement elements of the known type. Thanks to this solution it is possible to connect a transport conduit 60 containing an impeller 100 according to the present invention to different casings 79 in a rapid manner and without further changes being needed.

In use, the air flow coming from the air source through the transport conduit 60 brings the blades of the impeller 100 in rotation. While rotating, the blades of the impeller 100 impact the seed-air mixture flow thus breaking linearity of the flow, changing direction thereof and allowing a more uniform seed spread within the distributor device 80.

As clearly illustrated in figure 4, based on trials conducted by the Applicant it was found that in the seed distributor devices of the known type, the seed flow followed the direction of the transport conduit curve 60 thereby coming out off-centered relative to the center of the first half-shell 82 of the distributor device 80, thereby becoming the quantity of seeds at some peripheral outlet openings, in particular the openings 10, 11, 12, greater than at the others. This phenomenon is particularly marked in the case of seeds with a reduced specific weight, for example, but not limited to, less than 0.6 kg/dm³.

Figure 5 shows a graph representing the quantity of seeds coming out of each peripheral outlet 1 to 12 of a known seed distributor device showing how these quantities may differ from one another, i.e. be little uniform, and far from the average quantity of seeds provided for each peripheral outlet 1 to 12.

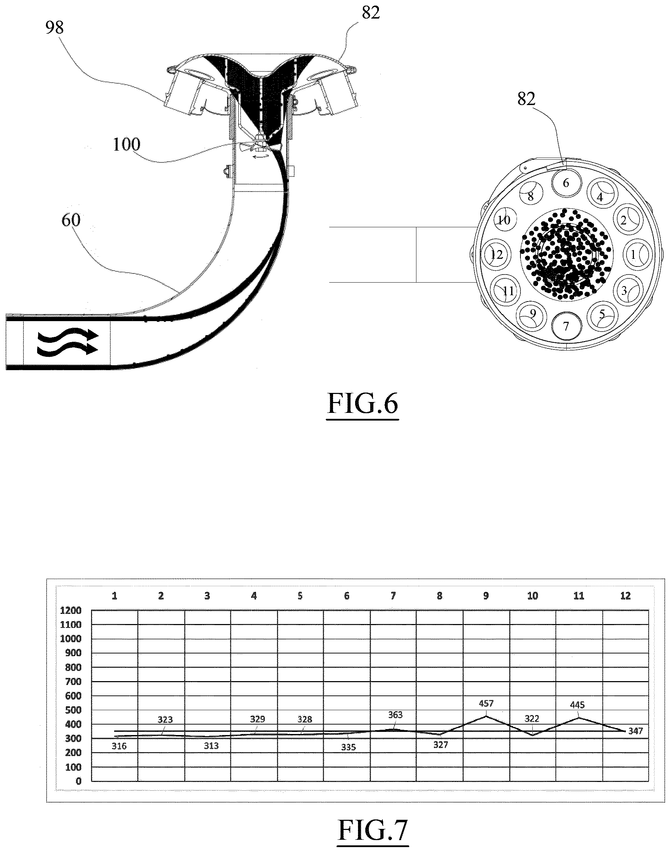

As clearly illustrated in figure 6, the presence of the impeller 100 has allowed to change the direction of the seed-air mixture flow making it come out more aligned at the center of the first half-shell 92 of the distributor device 80. The graph of figure 7, illustrates how the quantities of seeds coming out of each peripheral outlet 1 to 12 of the seed distributor device are substantially the same, thus evidencing the result illustrated in figure 6.

It is possible to provide for the rotary member to be brought in rotation by an actuating member, or motor, rather than by the air flow coming from the compressed air source.

All details may be replaced by other technically equivalent elements. Likewise, the materials used, as well as the contingent shapes and dimensions, may be any according to the requirements without thereby departing from the scope of protection of the following claims.

## Claims

1. Distributor device (80) for agricultural machinery comprising:
- a casing (79) defining a distributing chamber (81) internally thereof which comprises an inlet (94) and a plurality of peripheral outlets (1-12) intended for a granular material to be spread,
- the inlet (94) being particularly suitable for being connected to a transport conduit (60) of a mixture of air and granular material to be spread, and the peripheral outlets (1-12) being particularly suitable for being connected to transport conduits (98) for conveying the granular material towards a soil,
- the distributor device (80) further comprises an impeller (100) arranged proximate the inlet (94) of the distributing chamber (81), **characterized in that**
- said impeller (100) is connected rotatably to a frame (102),
- said frame (102) is engaged with the casing (79) and it comprises a plurality of shaped arms (104).

2. Device according to claim 1, **characterized in that** the casing (79) comprises a first half-shell (82) and a second half-shell (92) selectively engaged with each other, said shaped arms (104) being engaged with the half-shells (82, 92).

3. Device according to claim 2, **characterized in that** the first half-shell (82) comprises a concave surface with a central projection (84) which defines an annular depression (86) along the edge portion of the first half-shell (82).

4. Device according to claim 2, **characterized in that** said peripheral outlets (1-12) are formed along a peripheral annular portion of the second half-shell (92).

5. Device according to any one of the preceding claims, **characterized in that** it comprises a plurality of impellers (100).

6. Sowing unit for agricultural machinery, comprising one or more seed dispensing devices (45), and a transport conduit (60), **characterized in that** it further comprises a distributor device (80) as defined by any one of claims 1 to 5, the transport conduit (60) being arranged in fluid communication with at least one seed dispensing device (45) and the seed distributor device (80) for transporting a mixture of seeds and air from the dispensing device (45) to the distributor device (80).

## Patentansprüche

1. Verteilervorrichtung (80) für landwirtschaftliche Maschinen, umfassend:
ein Gehäuse (79), das eine Verteilerkammer (81) intern davon definiert, die einen Einlass (94) und eine Vielzahl von peripheren Auslässen (1-12) umfasst, die zum Verteilen eines körniges Material bestimmt sind,
wobei der Einlass (94) besonders geeignet ist, um mit einer Transportleitung (60) eines Gemischs aus Luft und zu verteilendem körnigem Material verbunden zu sein, und die peripheren Auslässe (1-12) besonders geeignet sind, um mit Transportleitungen (98) zum Fördern des körnigen Materials in Richtung eines Bodens verbunden zu sein,
wobei die Verteilervorrichtung (80) ferner ein Flügelrad (100) umfasst, das in der Nähe des Einlasses (94) der Verteilerkammer (81) angeordnet ist, **dadurch gekennzeichnet, dass**
das Flügelrad (100) drehbar mit einem Rahmen (102) verbunden ist,
der Rahmen (102) mit dem Gehäuse (79) in Eingriff ist und eine Vielzahl von geformten Armen (104) umfasst.

2. Vorrichtung nach Anspruch 1, **dadurch gekennzeichnet, dass** das Gehäuse (79) eine erste Halbschale (82) und eine zweite Halbschale (92) umfasst, die selektiv miteinander in Eingriff sind, wobei die geformten Arme (104) mit den Halbschalen (82, 92) in Eingriff sind.

3. Vorrichtung nach Anspruch 2, **dadurch gekennzeichnet, dass** die erste Halbschale (82) eine konkave Oberfläche mit einem mittleren Vorsprung (84) umfasst, der eine ringförmige Vertiefung (86) entlang des Randabschnitts der ersten Halbschale (82) definiert.

4. Vorrichtung nach Anspruch 2, **dadurch gekennzeichnet, dass** die peripheren Auslässe (1-12) entlang eines peripheren ringförmigen Abschnitts der zweiten Halbschale (92) gebildet sind.

5. Vorrichtung nach einem der vorherigen Ansprüche, **dadurch gekennzeichnet, dass** sie eine Vielzahl von Flügelrädern (100) umfasst.

6. Säeinheit für landwirtschaftliche Maschinen, umfassend eine oder mehrere Saatgutausgabevorrichtungen (45) und eine Transportleitung (60), **dadurch gekennzeichnet, dass** sie ferner eine Verteilervorrichtung (80) umfasst, wie sie durch einen der Ansprüche 1 bis 5 definiert ist,
wobei die Transportleitung (60) in Fluidverbindung mit mindestens einer Saatgutausgabevorrichtung (45) und der Saatgutverteilervorrichtung (80) angeordnet ist, um ein Gemisch aus Saatgut und Luft von der Ausgabevorrichtung (45) zu der Verteilervorrichtung (80) zu transportieren.

## Revendications

1. Dispositif de distribution (80) pour machines agricoles comprenant :
- un boîtier (79) définissant une chambre de distribution (81) à l'intérieur de celui-ci qui comprend une entrée (94) et une pluralité de sorties périphériques (1-12) destinées à un matériau granulaire à épandre,
- l'entrée (94) étant particulièrement adaptée pour être reliée à un conduit de transport (60) d'un mélange d'air et de matériau granulaire à épandre, et les sorties périphériques (1-12) étant particulièrement adaptées pour être reliées à des conduits de transport (98) pour transporter le matériau granulaire vers un sol,
- le dispositif de distribution (80) comprend en outre une roue (100) disposée à proximité de l'entrée (94) de la chambre de distribution (81), **caractérisé en ce que**
- ladite roue (100) est reliée de manière rotative à un cadre (102),
- ledit cadre (102) est engagé avec le boîtier (79) et il comprend une pluralité de bras profilés (104).

2. Dispositif selon la revendication 1, **caractérisé en ce que** le boîtier (79) comprend une première demi-coque (82) et une seconde demi-coque (92) engagées sélectivement l'une avec l'autre, lesdits bras profilés (104) étant engagés avec les demi-coques (82, 92).

3. Dispositif selon la revendication 2, **caractérisé en ce que** la première demi-coque (82) comprend une surface concave avec une saillie centrale (84) qui définit une dépression annulaire (86) le long de la partie de bord de la première demi-coque (82).

4. Dispositif selon la revendication 2, **caractérisé en ce que** lesdites sorties périphériques (1-12) sont formées le long d'une partie annulaire périphérique de la seconde demi-coque (92).

5. Dispositif selon l'une des revendications précédentes, **caractérisé en ce qu'**il comprend une pluralité de roues (100).

6. Unité de semis pour machine agricole, comprenant un ou plusieurs dispositifs de distribution de semences (45), et un conduit de transport (60), **caractérisée en ce qu'**elle comprend en outre un dispositif de distribution (80) tel que défini par l'une quelconque des revendications 1 à 5,
le conduit de transport (60) étant disposé en communication de fluide avec au moins un dispositif de distribution de semences (45) et le dispositif de distribution de semences (80) pour transporter un mélange de semences et d'air du dispositif de distribution (45) au dispositif de distribution (80).
